# FASCICULE DE BREVET EUROPEEN

(11) **EP 3 434 464 B1**
(45) Date de publication et mention de la délivrance du brevet: **02.12.2020**
(21) Numéro de dépôt: 18177075.1
(22) Date de dépôt: 11.06.2018
(51) Int. Cl.: B29D 99/00, B29C 64/10, B33Y 80/00, B29L 31/60

(54) **PROCEDE DE FABRICATION D'UN CORPS DE REMPLISSAGE D'UNE PALE D'UN ROTOR ET CORPS DE REMPLISSAGE D'UNE PALE DE ROTOR COMPORTANT AU MOINS UN ENSEMBLE ALVEOLAIRE A CELLULES FERMEES**
VERFAHREN ZUR HERSTELLUNG EINES KERNS EINES ROTORBLATTES UND WABENKERN EINES ROTORBLATTES MIT GESCHLOSSENEN ZELLEN
A METHOD OF FABRICATING A ROTOR BLADE FILLER BODY, AND A ROTOR BLADE FILLER BODY COMPRISING AT LEAST ONE CELLULAR ASSEMBLY HAVING CLOSED CELLS

(30) Priorité: 28.07.2017 FR 1770806
(43) Date de publication de la demande: 30.01.2019
(73) Titulaire: Airbus Helicopters, 13725 Marignane Cedex (FR)
(72) Inventeur: AMARI, André, 60520 LA CHAPELLE EN SERVAL (FR); GAFFIERO, Jacques, 75017 PARIS (FR); PICCONE, Jean-François, 13480 CABRIES (FR)
(74) Mandataire: GPI & Associés

(56) Documents cités:
- EP-A1- 2 620 240
- EP-A1- 2 843 193
- WO-A1-2004/022319
- NATTAPON CHANTARAPANICH ET AL: "Fabrication of three-dimensional honeycomb structure for aeronautical applications using selective laser melting: a preliminary investigation", RAPID PROTOTYPING JOURNAL, vol. 20, no. 6, 20 octobre 2014 (2014-10-20), pages 551-558, XP055199459, ISSN: 1355-2546, DOI: 10.1108/RPJ-08-2011-0086

## Description

La présente invention se rapporte au domaine des procédés de fabrication d'un corps de remplissage d'une pale d'un rotor. Un tel corps de remplissage d'une pale peut notamment être utilisé pour équiper une pale de rotor principal et/ou de rotor arrière d'un giravion ou toute voilure tournante telle que celle d'un drone multi-rotors ou encore d'une hélice notamment.

Une fois réalisé, un tel corps de remplissage est alors généralement recouvert d'un matériau composite de renfort comportant au moins un pli tissé imprégné d'une matrice résineuse ou d'une matrice minérale, voire métallique, servant de liant entre les différentes fibres du (ou des) pli(s) tissé(s), deux plis ou plus formant un stratifié par définition.

En outre, l'invention concerne également un corps de remplissage d'une pale d'un rotor comportant au moins un ensemble alvéolaire à cellules fermées.

De façon connue, les corps de remplissage des pales de giravion peuvent être formés de mousses polyuréthane par exemple ou encore de structures dites en "nids d'abeilles" à base par exemple de carton imprégné ou de papier recouvert d'un vernis, de kevlar imprégné de résine, d'aluminium déployé ou encore de matière plastique extrudée telle que notamment du polypropylène. Par ailleurs, telles que décrites dans le document WO2004/022319 et la publication de Nattapon Chantarapanich et al "Fabrication of three-dimensional honeycomb structure for aeronautical applications using selective laser melting : a preliminary investigation" publiée le 20 octobre 2014 dans le Rapid Prototyping Journal (XP055199459), de telles structures dites en "nids d'abeilles" peuvent également être produites par des procédés de fabrication additive couche par couche.

Cependant quel que soit le procédé de fabrication utilisé, de tels corps de remplissage forment alors une âme destinée à être agencée entre deux revêtements (stratifiés, métal,...) imprégnés d'une matrice. Par exemple un tel matériau est connu sous l'appellation NOMEX®, marque déposée de la société Dupont de Nemours. Il est constitué de feuilles fabriquées à partir de fibres d'aramide, ces feuilles étant par ailleurs imprégnées d'une résine phénolique.

A titre d'exemple, la masse volumique des structures en nids d'abeilles peut être de l'ordre de 25 kg/m³ (kilogramme par mètre cube) tandis que la masse volumique des mousses polyuréthane est plutôt comprise entre 65 et 120 kg/m³ (kilogramme par mètre cube).

Un sandwich ainsi réalisé par un revêtement inférieur, un corps de remplissage et un revêtement supérieur peut alors permettre de réaliser une pale de giravion présentant une résistance en flexion importante ainsi qu'une grande légèreté grâce à un taux de vide proche de 95 %.

Cependant compte tenu de la configuration géométrique des structures en nids d'abeilles, de tels corps de remplissage présentent des caractéristiques mécaniques en compression qui sont fortement variables selon les trois axes d'un repère orthonormé comportant un axe transversal X orienté suivant la corde des profils aérodynamiques des sections de la pale, un axe longitudinal Y orienté sensiblement suivant l'envergure de la pale (généralement la direction d'expansion des nids d'abeilles) et un axe en élévation Z perpendiculaire à la fois à l'axe transversal X et à l'axe longitudinal Y.

En effet, les corps de remplissage présentant une structure en nids d'abeilles comportent des caractéristiques importantes de résistance à la compression selon l'axe en élévation Z pouvant correspondre à la direction des génératrices des cellules du nid d'abeilles. Un tel positionnement des cellules des nids d'abeilles est notamment avantageux afin de contrer les efforts de compression pouvant provoquer un écrasement du profil aérodynamique des sections suivant cet axe en élévation Z.

En revanche, selon les deux autres axes, transversal X et longitudinal Y, la tenue en compression des structures en nids d'abeilles est plus faible. Une telle caractéristique est alors pénalisante, et à tout le moins contraignante, pour réaliser le positionnement des autres composants structurels de la pale tels que notamment les longerons, les caissons ou les nervures notamment qui doivent être agencés dans la pale préalablement au positionnement du pli tissé de renfort formant tout ou partie de son enveloppe externe et à une phase de moulage de cette enveloppe externe.

En effet, lors de la phase de moulage d'une pale de giravion, lorsque tous les éléments sont disposés dans le moule à l'état non polymérisé et que le moule est fermé, il apparait dans la section de pale et donc dans le corps de remplissage de celle-ci des efforts importants de compression qui tendent à déformer et déplacer lors de la polymérisation les différents constituants structurels de la pale suivant les trois axes X, Y et Z. Des déplacements de sous ensembles tels que des caissons de torsion peuvent alors être engendrés suivant l'axe transversal X en direction par exemple d'un bord de fuite du profil aérodynamique des sections à cause notamment de la faible résistance à la compression (ou plus exactement la raideur en compression) suivant l'axe transversal X des structures en nids d'abeilles formant le corps de remplissage de la pale.

De plus, les faces supérieure et inférieure des structures en nids d'abeilles sont ouvertes par construction puis sont par la suite recouvertes par les plis tissés de renfort. Du fait de cette discontinuité de maintien localisée au niveau d'arêtes vives et de la souplesse intrinsèques des plis tissés de renfort, on constate alors après fabrication ou fonctionnement au centre de chaque cellule des nids d'abeilles un phénomène d'effondrement local provoquant un effet de surface à facettes multiples tel une « balle de golf ». Cette dégradation localisée de la forme de la pale au niveau des corps de remplissage en nids d'abeilles est dénommée en langue anglaise « telegraphing » en référence aux trajectoires de câbles suspendus entre des pylônes.

Un tel effet de surface nécessite alors d'importantes opérations de finition telles que du masticage et du ponçage afin d'obtenir un état de surface satisfaisant. Le coût et les caractéristiques techniques des pales ainsi formées sont alors pénalisés par ces limites des structures en nids d'abeilles.

Si les corps de remplissage en mousse par exemple de type polyuréthane ne présentent pas ces inconvénients, ils présentent quant à eux des masses volumiques généralement plus importantes que celles des structures en nids d'abeilles. Elles sont en effet typiquement supérieures à 65 kg/m³ (kilogramme par mètre cube). De plus, leur coût de fabrication est relativement élevé car il faut dans un premier temps, couler des blocs de mousse, les étuver, les écroûter, puis dans un deuxième temps, usiner dans ces blocs des formes complexes en trois dimensions constituant les corps de remplissage en tant que tels.

Enfin, les mousses comportant par exemple des composés organiques tels que des polyols ou des iso-cyanates et les taux de chutes importants qui peuvent être à 80% non recyclables, car liés au procédé de fabrication de ces corps de remplissage, ont un empreinte écologique importante.

La présente invention a alors pour objet de proposer un procédé de fabrication des corps de remplissage de pales de rotors permettant de s'affranchir des limitations mentionnées ci-dessus. En outre, le procédé de fabrication permet de réaliser des corps de remplissage sans chute de matière.

De plus, les corps de remplissage ainsi réalisés sont très légers et comportent des caractéristiques de raideur et de résistance à la compression qui peuvent être sensiblement similaires suivant les trois axes X, Y et Z.

L'invention se rapporte donc à un procédé de fabrication d'un corps de remplissage d'une pale d'un rotor conformément à la revendication 1.

Un tel procédé de fabrication comporte une succession d'étapes d'ajouts de matière couche par couche, chaque étape consistant à réaliser une nouvelle couche de matière sur une couche précédente de matière réalisée à l'étape précédente, l'une au moins des étapes consistant à réaliser une couche de matière ajourée présentant une pluralité d'ouvertures.

Autrement dit, un tel procédé de fabrication permet de réaliser un corps de remplissage en trois dimensions i.e. selon les axes X, Y, Z et peut mettre en œuvre des étapes d'impression en trois dimensions par dépôt d'une matière au moyen d'une buse sur un support ou par stéréo lithographie en utilisant un laser permettant soit de polymériser localement un bain de matériau en phase liquide, soit de fritter sélectivement un matériau à l'état de poudre. Un tel procédé de fabrication d'un corps de remplissage de pale correspond alors aux procédés de type ALM correspondant, en langue anglaise, à l'acronyme de l'expression "Additive Layer Manufacturing".

Un tel procédé peut notamment permettre de conférer au corps de remplissage des masses volumiques variables dans les trois dimensions selon les axes X, Y, Z. Par suite, pour chaque section transversale selon un plan XZ d'un corps remplissage, le positionnement précis du centre de gravité de la section dans le plan XZ du corps de remplissage de la pale peut être déterminé lors de la conception de la structure interne du corps de remplissage de la pale, cette structure interne étant obtenue par exemple par la superposition successive des différentes couches de matériau en tout partie ajourées suivant l'axe en élévation Z.

Par ailleurs, indépendamment de la masse volumique des corps de remplissage qu'il est possible d'ajuster, un tel procédé de fabrication permet en outre également d'ajuster la raideur et/ou les caractéristique de tenue mécanique de la pale notamment au flambage ou en compression.

Par ailleurs, la succession d'étapes d'ajouts de matière couche par couche génère des couches de matière ajourées comportant chacune un contour fermé, de tels contours fermés respectifs de ces couches de matière ajourées étant deux à deux jointifs entre eux et formant une enveloppe fermée du corps de remplissage de la pale.

Par suite, la succession d'étapes permet de générer directement un corps de remplissage muni d'une enveloppe sensiblement lisse à surface externe. Un tel procédé permet ainsi d'éviter le phénomène de "telegraphing" lors du recouvrement du corps de remplissage par un (ou des) pli(s) tissé(s) de renfort ou un stratifié et par conséquent également des étapes supplémentaires de masticage et de ponçage.

Selon l'invention, un tel procédé de fabrication est remarquable en ce que la succession d'étapes d'ajouts de matière couche par couche génère des couches de matière ajourées comportant chacune un pluralité de formes géométriques agencées à l'intérieur du contour fermé et permettant de délimiter la pluralité d'ouvertures de la couche de matière ajourée, les pluralités de formes géométriques respectives des couches de matière ajourées étant deux à deux jointives entre elles et formant un ensemble alvéolaire à cellules fermées agencé à l'intérieur de l'enveloppe fermée du corps de remplissage de la pale.

Autrement dit, l'ensemble alvéolaire permet, en modifiant les formes géométriques par exemple dans des plans parallèles au plan XY, de modifier la masse volumique, la raideur et/ou les caractéristiques de résistance mécanique du corps de remplissage. Bien entendu la masse volumique, la raideur et les caractéristiques de résistance mécanique du corps de remplissage sont modifiées en adaptant le nombre, la taille et la forme des cellules fermées le constituant mais également l'épaisseur des formes géométriques permettant de générer ces cellules fermées

Par ailleurs et selon un premier mode de réalisation, la succession d'étapes d'ajouts de matière couche par couche peut générer des couches de matière ajourées formées dans un même matériau.

Cependant selon un second mode de réalisation avantageux, la succession d'étapes d'ajouts de matière couche par couche peut également générer des couches de matière ajourées formées dans au moins deux matériaux distincts l'un de l'autre.

Ces au moins deux matériaux distincts peuvent ainsi avantageusement comporter des masses volumiques distinctes l'une de l'autre, des raideurs et/ou des caractéristiques de résistance mécaniques, notamment au flambage ou en compression, différentes l'une de l'autre afin d'adapter le positionnement du centre de gravité massique de la pale, la raideur et/ou les caractéristiques de résistance mécanique globale de la pale ainsi formée avec un tel corps de remplissage.

Dans ce cas et selon une première variante de l'invention, la succession d'étapes d'ajouts de matière couche par couche peut générer au moins deux couches de matière ajourées distinctes l'une de l'autre, une première couche étant formée dans un premier matériau et une deuxième couche étant formée dans un deuxième matériau distinct du premier matériau.

Selon cette première variante, il est alors par exemple envisagé de réaliser des couches formées dans un premier matériau à proximité d'une portion médiane du corps de remplissage suivant l'axe en élévation Z puis de réaliser d'autres couches dans un second matériau à partir d'une distance prédéterminée d'éloignement suivant l'axe en élévation Z par rapport cette portion médiane. En outre, une telle portion médiane du corps de remplissage peut former une surface gauche dans laquelle s'inscrivent les cordes des différents profils aérodynamiques des sections d'une pale formée à partir d'un tel corps de remplissage.

Il peut ainsi être envisagé que le premier matériau proche de portion médiane possède une masse volumique supérieure à celle du second matériau éloigné de la portion médiane. Un tel procédé peut en effet être réalisé au moyen d'une machine d'impression en trois dimensions comportant au moins deux têtes d'impression, chaque tête permettant d'imprimer dans un matériau prédéterminé.

Selon une seconde variante de l'invention, la succession d'étapes d'ajouts de matière couche par couche peut générer au moins une couche de matière ajourée formée dans les au moins deux matériaux distincts l'un de l'autre.

Dans ce cas, il est alors envisagé de modifier la masse volumique de la matière du corps de remplissage suivant un même plan parallèle au plan XY et ce dans une même couche de matière. Au moins deux têtes d'impression peuvent alors être employées simultanément sur une même couche de matière.

Ainsi, une première tête d'impression peut imprimer une première zone située dans un plan parallèle au plan XY tandis qu'une seconde tête peut imprimer, par exemple simultanément, une seconde zone située également dans le même plan parallèle au plan XY.

La présente invention a aussi pour objet un corps de remplissage d'une pale d'un rotor comportant au moins un ensemble alvéolaire à cellules fermées conformément à la revendication 6.

Un tel corps de remplissage est remarquable en ce qu'il est réalisé par un procédé de fabrication tel que décrit ci-dessus et en ce qu'il comporte une enveloppe fermée, cette enveloppe fermée recouvrant totalement l'ensemble alvéolaire.

Autrement dit, un tel corps de remplissage est réalisé au moyen d'un procédé de fabrication de type ALM, c'est-à-dire un procédé comportant une succession d'étapes d'ajouts de matière couche par couche, chaque étape consistant à réaliser une nouvelle couche de matière sur une couche précédente de matière réalisée à l'étape précédente.

De plus, l'enveloppe fermée peut être lisse et continue de manière à éviter le phénomène de "telegraphing" lors du recouvrement du corps de remplissage par un (ou des) pli(s) tissé(s) de renfort ou des stratifiés et par conséquent également des étapes supplémentaires de masticage et de ponçage.

Avantageusement, l'ensemble alvéolaire peut être formé par des alvéoles à au moins quatre faces, chaque face de ces alvéoles étant formée respectivement par un polygone à au moins trois côtés.

En d'autres termes, les alvéoles peuvent former des polyèdres choisis parmi le groupe comportant notamment les tétraèdres, les hexaèdres, les octaèdres, les dodécaèdres et les icosaèdres.

En pratique, l'ensemble alvéolaire peut comporter au moins deux groupes d'alvéoles distinctes les unes des autres.

En effet, la forme et la taille des alvéoles peuvent varier en fonction de leur localisation respective dans le corps de remplissage.

Selon un premier exemple de réalisation de l'invention, l'ensemble alvéolaire peut comporter un premier groupe d'alvéoles dont les au moins trois côtés présentent respectivement chacun une première longueur et un second groupe d'alvéoles dont les au moins trois cotés présentent respectivement chacun une seconde longueur distincte de la première longueur.

Dans ce cas, c'est la taille des alvéoles qui est modifiée entre le premier groupe et le second groupe d'alvéoles. En outre, plus la taille des alvéoles est grande et plus la masse volumique du corps de remplissage est faible par rapport à des alvéoles de même forme mais de taille inférieure. Outre la modification de la masse volumique du corps de remplissage, un tel premier exemple de réalisation permet également de modifier la raideur et/ou les caractéristiques de résistance mécanique du corps de remplissage.

En outre, le premier groupe et le deuxième groupe d'alvéoles peuvent être agencés dans un même plan parallèle au plan XY. Alternativement ou simultanément, le premier groupe et le deuxième groupe d'alvéoles peuvent également être agencés le long d'un même axe parallèle à l'axe en élévation Z.

Selon un deuxième exemple de réalisation de l'invention, l'ensemble alvéolaire peut comporter un troisième groupe d'alvéoles dont les au moins trois côtés présentent respectivement chacun une première épaisseur et un quatrième groupe d'alvéoles dont les au moins trois cotés présentent respectivement chacun une deuxième épaisseur distincte de la première épaisseur.

Selon ce deuxième exemple de réalisation, l'épaisseur des faces des alvéoles est modifiée entre le troisième groupe et le quatrième groupe d'alvéoles. Il est également immédiat que pour une même taille et une même forme d'alvéoles, plus l'épaisseur des faces est grande et plus la masse volumique du corps de remplissage est élevée. Indépendamment de la masse volumique du corps de remplissage, un tel deuxième exemple de réalisation permet également de modifier la raideur et/ou les caractéristiques de résistance mécanique du corps de remplissage.

En outre, le troisième groupe et le quatrième groupe d'alvéoles peuvent être agencés dans un même plan parallèle au plan XY. Alternativement ou simultanément, le troisième groupe et le quatrième groupe d'alvéoles peuvent également être agencés le long d'un même axe parallèle à l'axe en élévation Z.

Selon un troisième exemple de réalisation de l'invention, l'ensemble alvéolaire peut comporter un cinquième groupe d'alvéoles dont les polygones formant les au moins quatre faces présentent respectivement chacun une première forme et un sixième groupe d'alvéoles dont les polygones formant les au moins quatre faces présentent respectivement chacun une deuxième forme distincte de la première forme.

Par suite, la forme des alvéoles peut être modifiée entre le cinquième groupe et le sixième groupe d'alvéoles du corps de remplissage. En outre, plus les polygones sont grands et plus la masse volumique du corps de remplissage est faible car elle comporte moins de matière par unité de surface dans une même couche. De même que précédemment, un tel troisième exemple de réalisation permet également de modifier les caractéristiques de raideur et/ou de résistance mécanique du corps de remplissage.

En outre, le cinquième groupe et le sixième groupe d'alvéoles peuvent être agencés dans un même plan parallèle au plan XY. Alternativement ou simultanément, le cinquième groupe et le sixième groupe d'alvéoles peuvent également être agencés le long d'un même axe parallèle à l'axe en élévation Z.

Selon un quatrième exemple de réalisation de l'invention, l'ensemble alvéolaire peut comporter un septième groupe d'alvéoles formé dans un premier matériau et un huitième groupe d'alvéoles formé dans un deuxième matériau distinct du premier matériau.

Dans ce cas, la masse volumique du matériau choisi pour former respectivement le septième groupe et le huitième groupe d'alvéoles permet directement de modifier la masse volumique du corps de remplissage, la raideur et/ou ses caractéristiques de résistance mécanique.

En outre, le septième groupe et le huitième groupe d'alvéoles peuvent être agencés dans un même plan parallèle au plan XY. Alternativement ou simultanément, le septième groupe et le huitième groupe d'alvéoles peuvent également être agencés le long d'un axe parallèle à l'axe en élévation Z.

L'invention et ses avantages apparaîtront avec plus de détails dans le cadre de la description qui suit avec des exemples donnés à titre illustratif en référence aux figures annexées qui représentent :
- la figure 1, un schéma en vue de côté d'un giravion équipé de pales,
- les figures 2, 3 et 5, des vues en coupe transversale de différents exemples de réalisation de corps de remplissage conformes à un mode de réalisation de l'invention,
- la figure 4a, deux vues en perspective de deux groupes distincts d'alvéoles formant un ensemble alvéolaire d'un corps de remplissage conforme à un mode de réalisation de l'invention,
- la figure 4b, des projections dans un plan de deux polygones illustrant la forme de deux groupes distincts d'alvéoles formant un ensemble alvéolaire d'un corps de remplissage conforme à un mode de réalisation de l'invention,
- la figure 6, deux vues en perspective de deux autres groupes distincts d'alvéoles formant un ensemble alvéolaire d'un corps de remplissage conforme à un mode de réalisation de l'invention, et
- les figures 7 et 8, deux schémas de principe illustrant deux procédés de fabrication conformes à des modes de réalisation de l'invention.

Les éléments présents dans plusieurs figures distinctes sont affectés d'une seule et même référence.

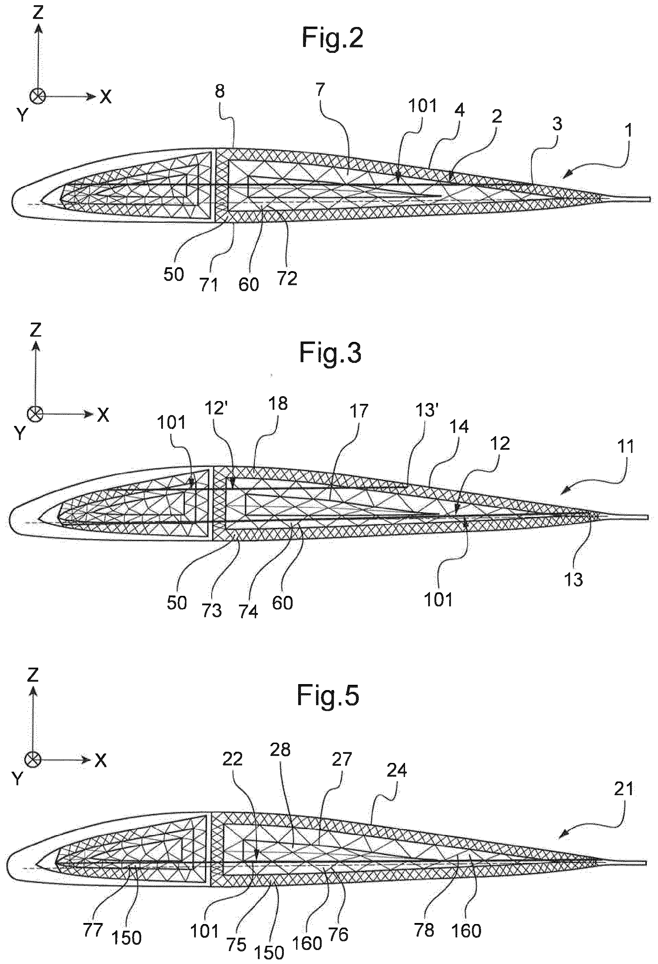

On note que trois axes X, Y et Z orthogonaux les uns par rapport aux autres sont représentés sur les figures 2, 3 et 5.

L'axe X est dit transversal dans la mesure où il s'étend transversalement le long d'une corde du profil aérodynamique des sections d'une pale entre un bord d'attaque et un bord de fuite, cette pale comportant un corps de remplissage conforme à l'invention.

Un autre axe Y est dit longitudinal et s'étend perpendiculairement par rapport à l'axe X suivant sensiblement l'envergure de la pale.

Enfin, un troisième axe Z est dit en élévation et correspond aux dimensions en épaisseur du profil aérodynamique des sections de la pale entre une face d'extrados et une face d'intrados de ce profil aérodynamique.

Comme déjà évoqué l'invention se rapporte donc à un corps de remplissage d'une pale d'un rotor, voire d'une hélice, par exemple de giravion.

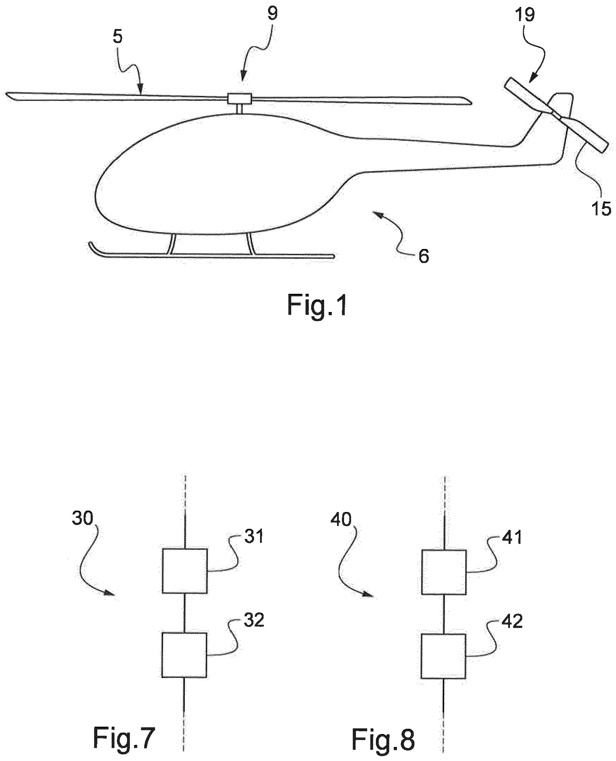

Ainsi tel que représenté à la figure 1, un tel corps de remplissage peut être agencé au niveau d'une pale 5 d'un rotor principal 9 et/ou au niveau d'une pale 15 d'un rotor arrière 19 d'un giravion 6.

Comme déjà indiqué, un tel corps de remplissage est remarquable en ce qu'il est fabriqué par un procédé de type ALM en réalisant une superposition de couches de matière les unes au dessus des autres par exemple en stéréo lithographie ou par impression en trois dimensions.

Tel que représenté à la figure 2 et selon un premier exemple de réalisation, le corps de remplissage 1 est réalisé par une superposition de couches de matière ajourées 2 comportant chacune une pluralité de formes géométriques 7 inscrites dans chacun des plans parallèles au plan XY. En outre, ces formes géométriques 7 délimitent chacune une ouverture 101 ménagée dans les couches de matière ajourées 2.

Par ailleurs, ces formes géométriques 7 sont délimitées par un contour fermé 3 dans chaque plan parallèle au plan XY et permettant de générer une enveloppe fermée 4 en trois dimensions du corps de remplissage 1. Par exemple, il est envisagé d'imprimer une couche de matière ajourée en déplaçant une tête d'impression selon un plan parallèle au plan XY, puis de déplacer la tête d'impression selon l'axe Z et d'imprimer une nouvelle couche de matière ajourée sur la couche précédente parallèlement au plan XY.

Un tel déplacement combiné de la tête d'impression selon les axes X, Y et Z permet donc de réaliser un corps de remplissage de pale s'étendant en trois dimensions selon les trois axes X, Y et Z.

Bien entendu, une telle orientation des couches est donnée à titre indicatif et non limitatif. En outre, les couches de matière ajourées peuvent également être déposées dans des plans parallèles au plan XZ et la tête d'impression être déplacée suivant l'axe Y entre deux opérations de dépôt d'une couche de matière ajourée.

Par ailleurs, une telle enveloppe fermée 4 contient ainsi un ensemble alvéolaire 8 de différentes alvéoles 50, 60 à cellules fermées s'étendant en trois dimensions suivant les trois axes X, Y , Z et permettant notamment de faire varier la masse volumique du corps de remplissage 1 suivant les trois axes X, Y et Z, la raideur et/ou les caractéristiques de résistance mécanique suivant les trois axes X, Y et Z d'un tel corps de remplissage 1.

Plus particulièrement, ces différentes variations de la masse volumique du corps de remplissage 1 suivant les trois axes X, Y et Z, la raideur et/ou les caractéristiques de résistance mécanique suivant les trois axes X, Y et Z peuvent être réalisées au moyen de différents groupes d'alvéoles 50, 60.

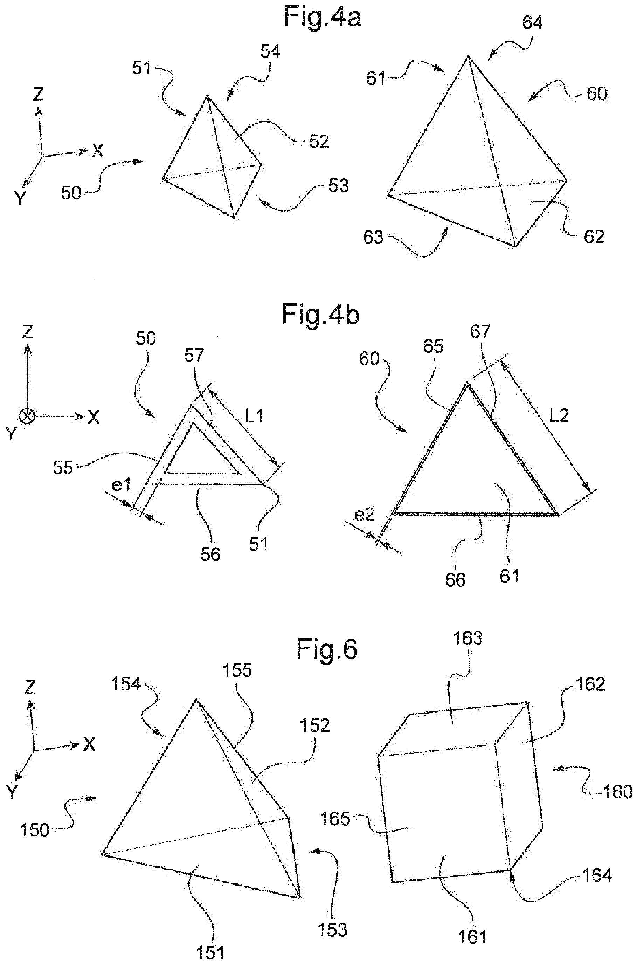

Ainsi, un premier groupe 71 d'alvéoles 50 peut être formé par des tétraèdres et ainsi comporter quatre faces 51-54, telles qu'illustrées à la figure 4a, ces faces 51-54 étant formées par des points définis par leurs coordonnées suivant les axes X, Y, Z. De même un deuxième groupe 72 d'alvéoles 60 peut être formé par des tétraèdres comportant quatre faces 61-64 définies par d'autres points avec des coordonnées suivant les axes X, Y, Z.

Conformément à la figure 4b, chaque face 51-54 des alvéoles 50 du premier groupe 71 peut comporter des côtés 55-57 comportant respectivement chacun une longueur L1. De même, chaque face 61-64 des alvéoles 60 du deuxième groupe 72 peut comporter des côtés 65-67 comportant respectivement chacun une longueur L2. Dans ce cas, la longueur L1 se rapportant aux alvéoles 50 est alors distincte de la longueur L2 se rapportant aux alvéoles 60.

De même et tel que représenté à la figure 3, le corps de remplissage 11 est réalisé par une superposition de couches de matière 12, 12' comportant chacune une pluralité de formes géométriques 17 inscrites dans chacun des plans parallèles au plan XY. En outre, ces formes géométriques 17 sont délimitées par un contour fermé 13, 13' dans chaque plan parallèle au plan XY permettant de générer une enveloppe fermée 14 en trois dimensions du corps de remplissage 11 par le déplacement selon l'axe Z de la tête d'impression.

Un tel corps de remplissage 11 peut alors comporter au moins deux couches 12 et 12' distinctes l'une de l'autre. Une première couche 12 peut alors être formée dans un premier matériau tandis que la deuxième couche 12' est quant à elle formée dans un deuxième matériau distinct du premier matériau.

Par ailleurs, chaque enveloppe fermée 14 peut également contenir un ensemble alvéolaire 18 de différentes alvéoles 50, 60 à cellules fermées permettant notamment de faire varier la masse volumique du corps de remplissage 11 suivant les trois axes X, Y et Z, la raideur et/ou les caractéristiques de résistance mécanique suivant les trois axes X, Y et Z d'un tel corps de remplissage 11.

Or conformément à la figure 4b, chaque face 51-54 des alvéoles 50 d'un troisième groupe 73 peut comporter des côtés 55-57 comportant respectivement chacun une épaisseur e1. De même, chaque face 61-64 des alvéoles 60 du quatrième groupe 74 peut comporter des côtés 65-67 comportant respectivement chacun une épaisseur e2. Dans ce cas, l'épaisseur e1 se rapportant aux alvéoles 50 est alors distincte de l'épaisseur e2 se rapportant aux alvéoles 60.

Tel que représenté aux figures 5 et 6, l'ensemble alvéolaire 28 comporte un cinquième groupe 75 d'alvéoles 150 dont les polygones formant les quatre faces 151-154 présentent respectivement chacun une première forme 155 telle un tétraèdre et un sixième groupe 76 d'alvéoles 160 dont les polygones formant les six faces 161-164 présentent respectivement chacun une deuxième forme 165 telle un cube ou hexaèdre.

En outre, l'ensemble alvéolaire 28 peut également comporter un septième groupe 77 d'alvéoles 150 formé dans un premier matériau et un huitième groupe 78 d'alvéoles 160 formé dans un deuxième matériau distinct du premier matériau.

De plus, une même couche 22 de matière du corps de remplissage 21 peut ainsi être formée dans deux matériaux distincts l'un de l'autre.

Par suite, un tel ensemble alvéolaire 28 comporte différentes alvéoles 150, 160 à cellules fermées permettant notamment de faire varier la masse volumique du corps de remplissage 21 suivant les trois axes X, Y et Z, la raideur et/ou les caractéristiques de résistance mécanique suivant les trois axes X, Y et Z d'un tel corps de remplissage 21.

Telle que représentée aux figures 7 et 8, l'invention se rapporte également à un procédé de fabrication d'un tel corps de remplissage 1, 11, 21. Comme déjà évoqué, ce procédé de fabrication 30, 40 comporte une succession d'étapes 31, 32, 41, 42 d'ajouts de matière couche par couche, chaque étape 32, 42 consistant à réaliser une nouvelle couche de matière sur une couche précédente de matière réalisée à l'étape précédente 31, 41.

Selon un premier procédé de fabrication 30 tel que représenté à la figure 7, la succession d'étapes 31, 32 d'ajouts de matière couche par couche peut alors générer des couches de matière ajourées 2 formées dans un même matériau.

Cependant selon un second procédé de fabrication 40 tel que représenté à la figure 8, la succession d'étapes 41, 42 d'ajouts de matière couche par couche peut générer des couches de matière ajourées 12, 12', 22 formées dans au moins deux matériaux distincts l'un de l'autre.

Naturellement, la présente invention est sujette à de nombreuses variations et combinaisons quant à sa mise en œuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention qui est définie par l'objet des revendications 1 à 12.

## Revendications

1. Procédé de fabrication (30, 40) d'un corps de remplissage (1, 11, 21) d'une pale (5, 15) d'un rotor (9, 19), ledit procédé (30, 40) comportant une succession d'étapes (31, 32, 41, 42) d'ajouts de matière couche par couche, chaque étape (32, 42) consistant à réaliser une nouvelle couche de matière sur une couche précédente de matière réalisée à l'étape précédente (31, 41), l'une au moins desdites étapes (31, 32, 41, 42) consistant à réaliser une couche de matière ajourée (2, 12, 22) présentant une pluralité d'ouvertures (101), ladite succession d'étapes (31, 32, 41, 42) d'ajouts de matière couche par couche générant des couches de matière ajourées (2, 12, 22) comportant chacune un contour fermé (3, 13, 23), lesdits contours fermés (3, 13, 23) respectifs desdites couches de matière ajourées (2, 12, 22) étant deux à deux jointifs entre eux et formant une enveloppe fermée (4, 14, 24) dudit corps de remplissage (1, 11, 21) de ladite pale (5, 15),
ladite succession d'étapes (31, 32, 41, 42) d'ajouts de matière couche par couche générant des couches de matière ajourées (2, 12, 22) comportant chacune un pluralité de formes géométriques (7, 17, 27) agencées à l'intérieur dudit contour fermé (3, 13, 23) et permettant de délimiter ladite pluralité d'ouvertures (101) de ladite couche de matière ajourée (2, 12, 22), lesdites pluralités de formes géométriques (7, 17, 27) respectives desdites couches de matière ajourées (2, 12, 22) étant deux à deux jointives entre elles, **caractérisé en ce que** les couches ajourées forment un ensemble alvéolaire (8, 18, 28) à cellules fermées agencé à l'intérieur de ladite enveloppe fermée (4, 14, 24) dudit corps de remplissage (1, 11, 21) de ladite pale (5, 15).

2. Procédé de fabrication selon la revendication 1,
**caractérisé en ce que** ladite succession d'étapes (31, 32) d'ajouts de matière couche par couche génère des couches de matière ajourées (2) formées dans un même matériau.

3. Procédé de fabrication selon la revendication 1,
**caractérisé en ce que** ladite succession d'étapes (41, 42) d'ajouts de matière couche par couche génère des couches de matière ajourées (12, 12', 22) formées dans au moins deux matériaux distincts l'un de l'autre.

4. Procédé de fabrication selon la revendication 3,
**caractérisé en ce que** ladite succession d'étapes (41, 42) d'ajouts de matière couche par couche génère au moins deux couches de matière ajourées (12) et (12') distinctes l'une de l'autre, une première couche (12) étant formée dans un premier matériau et une deuxième couche (12') étant formée dans un deuxième matériau distinct dudit premier matériau.

5. Procédé de fabrication selon l'une quelconque des revendications 3 à 4,
**caractérisé en ce que** ladite succession d'étapes (41, 42) d'ajouts de matière couche par couche génère au moins une couche de matière ajourée (22) formée dans lesdits au moins deux matériaux distincts l'un de l'autre.

6. Corps de remplissage (1, 11, 21) d'une pale (5, 15) d'un rotor (9, 19) comportant au moins un ensemble alvéolaire (8, 18, 28) à cellules fermées,
**caractérisé en ce que** ledit corps de remplissage (1, 11, 21) est réalisé par un procédé de fabrication selon l'une quelconque des revendications 1 à 5 et **en ce que** ledit corps de remplissage (1, 11, 21) comporte une enveloppe fermée (4, 14, 24), ladite enveloppe fermée (4, 14, 24) recouvrant totalement ledit ensemble alvéolaire (8, 18, 28).

7. Corps de remplissage selon la revendication 6,
**caractérisé en ce que** ledit ensemble alvéolaire (8, 18, 28) est formé par des alvéoles (50, 60, 150, 160) à au moins quatre faces (51-54, 61-64, 151-154, 161-164), chaque face (51-54, 61-64, 151-154, 161-164) desdites alvéoles (50, 60, 150, 160) étant formée respectivement par un polygone à au moins trois côtés (55-57, 65-67).

8. Corps de remplissage selon la revendication 7,
**caractérisé en ce que** ledit ensemble alvéolaire (8, 18, 28) comporte au moins deux groupes (71, 73, 75, 77) et (72, 74, 76, 78) d'alvéoles (50, 60, 150, 160) distinctes les unes des autres.

9. Corps de remplissage selon la revendication 8,
**caractérisé en ce que** ledit ensemble alvéolaire (8) comporte un premier groupe (71) d'alvéoles (50) dont lesdits au moins trois côtés (55-57) présentent respectivement chacun une première longueur L1 et un second groupe (72) d'alvéoles (60) dont lesdits au moins trois cotés (65-67) présentent respectivement chacun une seconde longueur L2 distincte de ladite première longueur L1.

10. Corps de remplissage selon l'une quelconque des revendications 8 à 9,
**caractérisé en ce que** ledit ensemble alvéolaire (18) comporte un troisième groupe (73) d'alvéoles (50) dont lesdits au moins trois côtés (55-57) présentent respectivement chacun une première épaisseur e1 et un quatrième groupe (74) d'alvéoles (60) dont lesdits au moins trois cotés (65-67) présentent respectivement chacun une deuxième épaisseur e2 distincte de ladite première épaisseur e1.

11. Corps de remplissage selon l'une quelconque des revendications 8 à 10,
**caractérisé en ce que** ledit ensemble alvéolaire (28) comporte un cinquième groupe (75) d'alvéoles (150) dont lesdits polygones formant lesdites au moins quatre faces (151-154) présentent respectivement chacun une première forme (155) et un sixième groupe (76) d'alvéoles (160) dont lesdits polygones formant lesdites au moins quatre faces (161-164) présentent respectivement chacun une deuxième forme (165) distincte de ladite première forme (155).

12. Corps de remplissage selon l'une quelconque des revendications 8 à 11,
**caractérisé en ce que** ledit ensemble alvéolaire (28) comporte un septième groupe (77) d'alvéoles (150) formé dans un premier matériau et un huitième groupe (78) d'alvéoles (160) formé dans un deuxième matériau distinct dudit premier matériau.

## Patentansprüche

1. Herstellungsverfahren (30, 40) eines Füllkörpers (1, 11, 21) für ein Blatt (5, 15) eines Rotors (9, 19), wobei das Verfahren (30, 40) eine Abfolge von Schritten (31, 32, 41, 42) des schichtweisen Hinzufügens von Material umfasst, wobei jeder Schritt (32, 42) darin besteht, eine neue Materialschicht auf einer vorhergehenden, im vorhergehenden Schritt (31, 41) hergestellten Materialschicht zu erzeugen, wobei mindestens einer der Schritte (31, 32, 41, 42) darin besteht, eine Schicht aus durchbrochenem Material (2, 12, 22) mit einer Mehrzahl von Öffnungen (101) zu erzeugen, wobei die Abfolge von Schritten (31, 32, 41, 42) des schichtweisen Hinzufügens von Material Schichten aus durchbrochenem Material (2, 12, 22) ergibt, die jeweils eine geschlossene Kontur (3, 13, 23) aufweisen, wobei die geschlossenen Konturen (3, 13, 23) der Schichten aus perforiertem Material (2, 12, 22) paarweise aneinander anliegen und eine geschlossene Hülle (4, 14, 24) des Füllkörpers (1, 11, 21) des Blattes (5, 15) bilden, wobei die Abfolge von Schritten (31, 32, 41, 42) des schichtweisen Hinzufügens von Material Schichten aus durchbrochenem Material (2, 12, 22) ergibt, die jeweils eine Mehrzahl von geometrischen Formen (7, 17, 27) umfassen, die innerhalb der geschlossenen Kontur (3, 13, 23) angeordnet sind und es ermöglichen, die Mehrzahl von Öffnungen (101) der Schicht aus durchbrochenem Material (2, 12, 22) zu begrenzen, wobei die Mehrzahlen von geometrischen Formen (7, 17, 27) der Schichten aus durchbrochenem Material (2, 12, 22) jeweils paarweise miteinander verbunden sind,
**dadurch gekennzeichnet, dass** die durchbrochenen Schichten eine geschlossenzellige Wabenanordnung (8, 18, 28) bilden, die innerhalb der geschlossenen Hülle (4, 14, 24) des Füllkörpers (1, 11, 21) des Blattes (5, 15) angeordnet ist.

2. Herstellungsverfahren nach Anspruch 1,
**dadurch gekennzeichnet, dass** die Abfolge von Schritten (31, 32) des schichtweisen Hinzufügens von Material Schichten aus durchbrochenem Material (2) ergibt, die aus einem gleichen Material gebildet sind.

3. Herstellungsverfahren nach Anspruch 1,
**dadurch gekennzeichnet, dass** die Abfolge von Schritten (31, 32) des schichtweisen Hinzufügens von Material Schichten aus durchbrochenem Material (2) ergibt, die aus mindestens zwei voneinander verschiedenen Materialien gebildet sind.

4. Herstellungsverfahren nach Anspruch 3,
**dadurch gekennzeichnet, dass** die Abfolge von Schritten (41, 42) des schichtweisen Hinzufügens von Material mindestens zwei Schichten aus durchbrochenem Material (12) und (12') ergibt, die sich voneinander unterscheiden, wobei eine erste Schicht (12) aus einem ersten Material und eine zweite Schicht (12') aus einem zweiten Material gebildet ist, das sich von dem ersten Material unterscheidet.

5. Herstellungsverfahren nach einem der Ansprüche 3 bis 4,
**dadurch gekennzeichnet, dass** die Abfolge von Schritten (41, 42) des schichtweisen Hinzufügens von Material mindestens eine Schicht aus durchbrochenem Material (22) ergibt, die aus den mindestens zwei voneinander verschiedenen Materialien gebildet ist.

6. Füllkörper (1, 11, 21) eines Blattes (5, 15) eines Rotors (9, 19), der mindestens eine geschlossenzellige Zellenanordnung (8, 18, 28) aufweist,
**dadurch gekennzeichnet, dass** der Füllkörper (1, 11, 21) durch ein Herstellungsverfahren nach einem der Ansprüche 1 bis 5 hergestellt ist und dass der Füllkörper (1, 11, 21) eine geschlossene Hülle (4, 14, 24) aufweist, wobei die geschlossene Hülle (4, 14, 24) die Zellenanordnung (8, 18, 28) vollständig bedeckt.

7. Füllkörper nach Anspruch 6,
**dadurch gekennzeichnet, dass** die Zellenanordnung (8, 18, 28) durch Zellen (50, 60, 150, 160) mit mindestens vier Seiten (51-54, 61-64, 151-154, 161-164) gebildet ist, wobei jede Seite (51-54, 61-64, 151-154, 161-164) der Zellen (50, 60, 150, 160) jeweils durch ein Polygon mit mindestens drei Kanten (55-57, 65-67) gebildet ist.

8. Füllkörper nach Anspruch 7,
**dadurch gekennzeichnet, dass** die Zellenanordnung (8, 18, 28) mindestens zwei Gruppen (71, 73, 75, 77) und (72, 74, 76, 78) von Zellen (50, 60, 150, 160) umfasst, die sich voneinander unterscheiden.

9. Füllkörper nach Anspruch 8,
**dadurch gekennzeichnet, dass** die Zellenanordnung (8) eine erste Gruppe (71) von Zellen (50), deren mindestens drei Kanten (55-57) jeweils eine erste Länge L1 aufweisen, und eine zweite Gruppe (72) von Zellen (60) umfasst, deren mindestens drei Kanten (65-67) jeweils eine zweite Länge L2 aufweisen, die sich von der ersten Länge L1 unterscheidet.

10. Füllkörper nach einem der Ansprüche 8 bis 9,
**dadurch gekennzeichnet, dass** die Zellenanordnung (18) eine dritte Gruppe (73) von Zellen (50), deren mindestens drei Kanten (55-57) jeweils eine erste Dicke e1 aufweisen, und eine vierte Gruppe (74) von Zellen (60) umfasst, deren mindestens drei Kanten (65-67) jeweils eine zweite Dicke e2 aufweisen, die sich von der ersten Dicke e1 unterscheidet.

11. Füllkörper nach einem der Ansprüche 8 bis 10,
**dadurch gekennzeichnet, dass** die Zellenanordnung (28) eine fünfte Gruppe (75) von Zellen (150), deren mindestens vier Seiten (151-154) bildende Polygone jeweils eine erste Form (155) aufweisen, und eine sechste Gruppe (76) von Zellen (160) umfasst, deren die mindestens vier Seiten (161-164) bildenden Polygone jeweils eine zweite, von der ersten Form (155) verschiedene Form (165) aufweisen.

12. Füllkörper nach einem der Ansprüche 8 bis 11,
**dadurch gekennzeichnet, dass** die Wabenanordnung (28) eine siebte Gruppe (77) von Zellen (150), die aus einem ersten Material gebildet sind, und eine achte Gruppe (78) von Zellen (160) umfasst, die aus einem zweiten Material gebildet sind, das sich von dem ersten Material unterscheidet.

## Claims

1. A fabrication method (30, 40) for fabricating a filler body (1, 11, 21) of a blade (5, 15) for a rotor (9, 19), the method (30, 40) comprising a succession of steps (31, 32, 41, 42) of adding material layer by layer, each step (32, 42) consisting in making a new layer of material on a preceding layer of material made in the preceding step (31, 41), at least one of the steps (31, 32, 41, 42) consisting in making an openwork layer of material (2, 12, 22) presenting a plurality of openings (101), the succession of steps (31, 32, 41, 42) of adding material layer by layer generating openwork layers (2, 12, 22) of material, each having a closed outline (3, 13, 23), the respective closed outlines (3, 13, 23) of the openwork layers (2, 12, 22) of material touching mutually in pairs and forming a closed envelope (4, 14, 24) of the filler body (1, 11, 21) for the blade (5, 15),
the succession of steps (31, 32, 41, 42) of adding material layer by layer generating openwork layers of material (2, 12, 22), each having a plurality of geometrical shapes (7, 17, 27) arranged within the closed outline (3, 13, 23) and allowing to define the plurality of openings (101) of the openwork layer (2, 12, 22) of material, the pluralities of respective geometrical shapes (7, 17, 27) in the openwork layers of material (2, 12, 22) touching mutually in pairs, **characterised in that** the openwork layers of material form a cellular lattice (8, 18, 28) of closed cells arranged inside the closed envelope (4, 14, 24) of the filler body (1, 11, 21) of the blade (5, 15).

2. The fabrication method according to claim 1, **characterised in that** the succession of steps (31, 32) of adding material layer by layer generates openwork layers (2) of material made out of the same substance.

3. The fabrication method according to claim 1, **characterised in that** the succession of steps (41, 42) of adding material layer by layer generates openwork layers (12, 12', 22) of material made of at least two substances distinct from each other.

4. The fabrication method according to claim 3, **characterised in that** the succession of steps (41, 42) of adding material layer by layer generates at least two openwork layers (12 and 12') of material distinct from each other, a first layer (12) being formed out of a first substance and a second layer (12') being formed out of a second substance distinct from the first substance.

5. The fabrication method according to any one of claims 3 to 4, **characterised in that** the succession of steps (41, 42) of adding keeper layer by layer generates at least one openwork layer (22) of material made out of the at least two substances that are distinct from each other.

6. A filler body (1, 11, 21) for a blade (5, 15) of a rotor (9, 19), the filler body (1, 11, 21) comprising at least one cellular lattice (8, 18, 28) of closed cells, **characterised in that** the filler body (1, 11, 21) is made by a fabrication method according any one of claims 1 to 5 and **in that** the filler body (1, 11, 21) has a closed envelope (4, 14, 24), the closed envelope (4, 14, 24) totally covering the cellular lattice (8, 18, 28).

7. The filler body according to claim 6, **characterised in that** the cellular lattice (8, 18, 28) is made up of cells (50, 60, 150, 160) each having at least four faces (51-54, 61-64, 151-154, 161-164) each face (51-54, 61-64, 151-154, 161-164) of the cells (50, 60, 150, 160) being formed by a respective polygon having at least three sides (55-57, 65-67).

8. The filler body according to claim 7, **characterised in that** the set (8, 18, 28) of cells includes at least two groups (71, 73, 75, 77) and (72, 74, 76, 78) of cells (50, 60, 150, 160) that are distinct from each other.

9. The filler body according to claim 8, **characterised in that** the set (8) of cells comprises a first group (71) of cells (50) for which each of the at least three sides (55-57) presents a respective first length L1, and a second group (72) of cells (60) for which each of the at least three sides (65-67) presents a respective second length L2 distinct from the first length L1.

10. The filler body according to any one of claims 8 to 9, **characterised in that** the cellular lattice (18) includes a third group (73) of cells (50) for which each of the at least three sides (55-57) presents a respective first thickness e1, and a fourth group (74) of cells (60) for which each of the at least three sides (65-67) presents a respective second thickness e2 distinct from the first thickness e1.

11. The filler body according to any one of claims 8 to 10, **characterised in that** the set (28) of cells includes a fifth group (75) of cells (150) for which each of the polygons forming the at least four faces (151-154) presents a respective first shape (155) and a sixth group (76) of cells (160) for which each of the polygons forming the at least four faces (161-164) presents a respective second shape (165) distinct from the first shape (155).

12. The filler body according to any one of claims 8 to 11, wherein the set (28) of cells includes a seventh group (77) of cells (150) made of a first substance, and an eighth group (78) of cells (160) made of a second substance distinct from the first substance.
